# EUROPEAN PATENT APPLICATION

(11) **EP 4 574 649 A1**
(43) Date of publication of application: **25.06.2025**
(21) Application number: 23217419.3
(22) Date of filing: 18.12.2023
(51) Int. Cl.: B64C 1/18, B64D 11/06

(54) **HIGHLY ADAPTABLE AND MULTIFUNCTIONAL SEAT RAIL FOR AN AIRCRAFT CABIN FLOOR**

(71) Applicant: Airbus Operations GmbH, 21129 Hamburg (DE)
(72) Inventor: Benthien, Hermann, 21129 Hamburg (DE); Bruhn, Marvin, 21129 Hamburg (DE)

(57) **Abstract**

The present invention relates to a fixation interface (10) for an aircraft cabin floor (12).

In order to provide for an improved fixation interface with a high adaptability to its constructional environment, the interface comprises a plurality of primary connection studs (14) and a plurality of secondary attachment interface components (16). Each of the plurality of primary connection studs comprises a mounting foot region (18) and an interface head region (20) arranged along a longitudinal axis (21) of each of the plurality of primary connection studs. The mounting foot region is configured to be fastened to one of a plurality of fastening points (22) linearly arranged in a floor arrangement (24) by a form-fitting connection with one of the plurality of fastening points. On two opposite lateral sides (26), the interface head region of each of the plurality of primary connection studs comprises a plurality of protrusions (28) extending traverse to the longitudinal axis. Each one of the plurality of secondary attachment interface components is configured to be mountable to each one of the interface head regions of the plurality of primary connection studs by engaging the plurality of protrusions in a form-fitting manner in a longitudinal direction. Each one of the plurality of secondary attachment interface components is positionable to the interface head region in a positioning movement and is lockable in a locking movement to achieve a form-fitting hold. The plurality of secondary attachment interface components comprises a first type (30) of interface components and a second type (32) of interface components and the first type of interface components are positionable in a first positioning movement (34) and lockable in a first locking movement (36), and the second type of interface components are positionable in a second positioning movement (38) and lockable in a second locking movement (40), the first locking movement being different than the second locking movement.

## Description

### FIELD OF THE INVENTION

The present invention relates to fastening sites of an aircraft floor construction and relates in particular to a fixation interface for an aircraft cabin floor, an aircraft floor mounting system, an aircraft floor arrangement, an aircraft and a method for providing a fixation interface for an aircraft cabin floor.

### BACKGROUND OF THE INVENTION

Cabin interior equipment, such as passenger seats, may be mounted by dedicated fastening sites at a floor construction of an aircraft cabin. An example for such fastening sites are so-called seat rails. Seat rails may be provided as longitudinal profiles with a defined cross-section that allow clamping of, for example a seat leg fitting or a seat rail cover along the rail. The upper part of the seat rail may provide recesses or protrusions as an interface for a form-fitting engagement of the fitting. This seat rail design may however come with restrictions regarding its applicability to certain floor constructions. Moreover, the seat rail design itself may limit the applicability of its interface to cabin interior equipment.

### SUMMARY OF THE INVENTION

There may thus be a need to provide for an improved fixation interface with a high adaptability to its constructional environment.

The object of the present invention is solved by the subject-matter of the independent claims; further embodiments are incorporated in the dependent claims. It should be noted that the following described aspects of the invention apply also for the fixation interface for the aircraft cabin floor, the aircraft floor mounting system, the aircraft floor arrangement, the aircraft and the method for providing the fixation interface for the aircraft cabin floor.

According to the present invention, a fixation interface for an aircraft cabin floor is provided. The interface comprising a plurality of primary connection studs and a plurality of secondary attachment interface components. Each of the plurality of primary connection studs comprises a mounting foot region and an interface head region arranged along a longitudinal axis of each of the plurality of primary connection studs. The mounting foot region is configured to be fastened to one of a plurality of fastening points linearly arranged in a floor arrangement by a form-fitting connection with one of the plurality of fastening points. On two opposite lateral sides, the interface head region of each of the plurality of primary connection studs comprises a plurality of protrusions extending traverse to the longitudinal axis. Each one of the plurality of secondary attachment interface components is configured to be mountable to each one of the interface head regions of the plurality of primary connection studs by engaging the plurality of protrusions in a form-fitting manner in a longitudinal direction. Each one of the plurality of secondary attachment interface components is positionable to the interface head region in a positioning movement and is lockable in a locking movement to achieve a form-fitting hold. The plurality of secondary attachment interface components comprises a first type of interface components and a second type of interface components. The first type of interface components are positionable in a first positioning movement and lockable in a first locking movement, and the second type of interface components are positionable in a second positioning movement and lockable in a second locking movement, the first locking movement being different than the second locking movement.

As an advantage, a fixation interface for cabin equipment is provided that is adaptable to various types of seat rails. As a further advantage, a fixation interface for cabin equipment is provided that is adaptable to various types of floor arrangements. As a further advantage, a continuous fixation interface for cabin equipment is provided for various types of floor arrangements and seat rails.

According to an example, the first type of interface components are attachment portions configured to form a seat rail portion to fix a seat to the aircraft cabin floor.

According to an example, the second type of interface components are rail cover sections to close a gap between floor panels adjacent to the plurality of linearly arranged fastening points.

According to an example, one of the plurality of connection studs is configured to be fastened to one of the plurality of fastening points in the floor arrangement to provide a longitudinally extending fixation interface segment configured to form an adaptable seat rail.

According to the present invention, also an aircraft floor mounting system is provided. The system comprises at least one longitudinally extending clamping profile, a plurality of fastening elements configured to provide a plurality of fastening points and at least one fixation interface with a plurality of primary connection studs according to one of the previous examples. The longitudinally extending clamping profile comprises at least one outer section for holding an edge of at least one floor panel, and a central recessed section for attaching the longitudinally extending clamping profile to a floor support beam of an aircraft cabin. The plurality of fastening elements is configured to be provided along the central recessed section in the mounted state. The longitudinally extending clamping profile is configured to be attached to the floor support beam by the plurality of fastening elements. One of the plurality of primary connection studs is configured to be mounted to a part of one of the plurality of fastening points.

As an advantage, the same fixation interface is applicable to a variety of clamping profiles having different thicknesses and geometrical shapes.

According to the present invention, also an aircraft floor arrangement is provided. The aircraft floor arrangement comprises at least one floor support beam, a plurality of fastening points provided on an upper side along at least a part of the floor support beam, a plurality of fastening elements and at least one fixation interface with a plurality of primary connection studs according to one of previous examples. One of the plurality of fastening points is configured to receive the mounting foot region of one of the plurality of primary connection studs. The plurality of fastening points is configured to secure the plurality of connection studs against the floor support beam by the plurality of fastening elements.

As an advantage, a floor arrangement with cabin equipment and various types of floor support beams can be established.

According to the present invention, also an aircraft is provided. The aircraft comprises a fuselage, a wing arrangement attached to the fuselage, an aircraft cabin and an aircraft floor arrangement according to one of the previous examples. The aircraft cabin is provided within the fuselage and the aircraft cabin comprises the aircraft floor arrangement.

As an advantage, an aircraft with a high customizability is provided. As an advantage, an aircraft cabin with a high adaptability is provided.

According to the present invention, also method for providing a fixation interface for an aircraft cabin floor is provided. The method comprises the following steps:
- Providing a plurality of primary connection studs; and
- Providing a plurality of secondary attachment interface components. Each of the plurality of primary connection studs comprises a mounting foot region and an interface head region arranged along a longitudinal axis of each of the plurality of primary connection studs. The mounting foot region is configured to be fastened to one of a plurality of fastening points linearly arranged in a floor arrangement by a form-fitting connection with one of the plurality of fastening points. On two opposite lateral sides, the interface head region of each of the plurality of primary connection studs comprises a plurality of protrusions extending traverse to the longitudinal axis. Each one of the plurality of secondary attachment interface components is configured to be mountable to each one of the interface head regions of the plurality of primary connection studs by engaging the plurality of protrusions in a form-fitting manner in a longitudinal direction. Each one of the plurality of secondary attachment interface components is positionable to the interface head region in a positioning movement and is lockable in a locking movement to achieve a form-fitting hold. The plurality of secondary attachment interface components comprises a first type of interface components and a second type of interface components. The first type of interface components are positionable in a first positioning movement and lockable in a first locking movement, and the second type of interface components are positionable in a second positioning movement and lockable in a second locking movement, the first locking movement being different than the second locking movement.

As an advantage, an aircraft can be retrofitted with the adaptable seat rail.

According to an aspect, a highly adaptable and multifunctional seat rail for an aircraft cabin floor is provided.

According to an aspect, longitudinal support bolts with cabin equipment supply elements are provided. The support bolts comprise an attachment section at their lower end that makes them attachable to any desired support. At the upper end the support bolts provide a length-adjustable form-locking connection to cabin equipment supply elements. The form locking connection is configured to adjust the position of the cabin equipment supply elements with respect to their distance to the support in a longitudinal direction. A multiplicity of the longitudinal support bolts can be arranged along a line to provide a seat rail. The adjustability of the form-locking connection is configured to provide a straight-forward, simple and comfortable adjustment, also with regards to the form-locking connection being spatially restricted by the constructional surrounding of the seat rail.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of an example of a fixation interface.
Fig. 2 shows a cross-section of a general scheme of an example of a fixation interface, comprising a first type and a second type of interface component in a staggered arrangement.
Fig. 3 shows a cross-section of a general scheme of an example of a fixation interface comprising part-radial toothing elements.
Fig. 4 shows a cross-section of a general scheme of examples of an aircraft floor mounting system and an aircraft floor arrangement.
Fig. 5 shows an example of an aircraft comprising the aircraft floor arrangement.
Fig. 6 shows basic steps of an example of a method for providing a fixation interface for an aircraft cabin floor.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

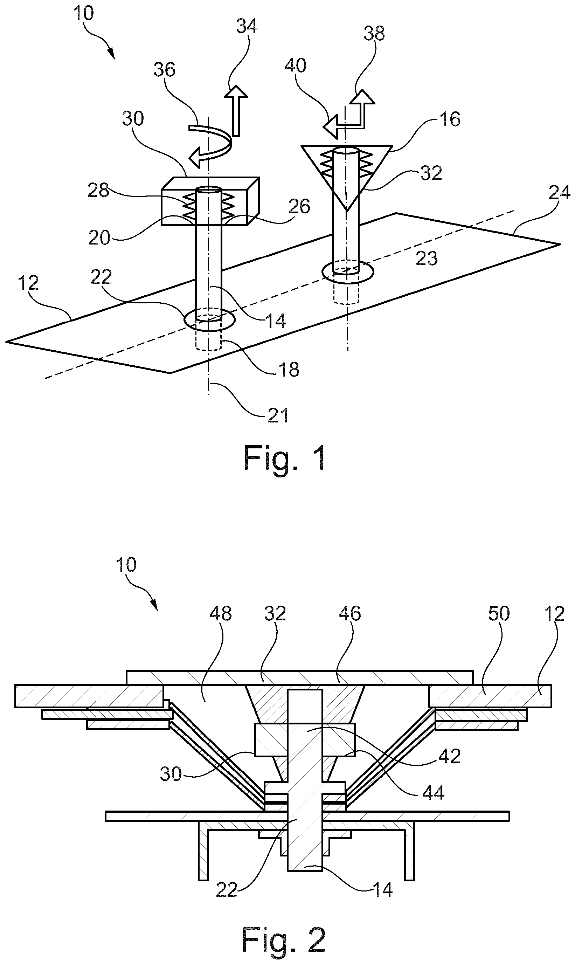

Fig. 1 schematically shows a general scheme of an example of a fixation interface 10. The fixation interface 10 for an aircraft cabin floor 12 comprises a plurality of primary connection studs 14 and a plurality of secondary attachment interface components 16. Each of the plurality of primary connection studs 14 comprises a mounting foot region 18 and an interface head region 20 arranged along a longitudinal axis 21 of each of the plurality of primary connection studs 14. The mounting foot region 18 is configured to be fastened to one of a plurality of fastening points 22 linearly arranged, as shown by the dashed line 23, in a floor arrangement 24 by a form-fitting connection with one of the plurality of fastening points 22. On two opposite lateral sides 26, the interface head region 20 of each of the plurality of primary connection studs 14 comprises a plurality of protrusions 28 extending traverse to the longitudinal axis 21. Each one of the plurality of secondary attachment interface components 16 is configured to be mountable to each one of the interface head regions 20 of the plurality of primary connection studs 14 by engaging the plurality of protrusions 28 in a form-fitting manner in a longitudinal direction. Each one of the plurality of secondary attachment interface components 16 is positionable to the interface head region 20 in a positioning movement and is lockable in a locking movement to achieve a form-fitting hold. The plurality of secondary attachment interface components 16 comprises a first type 30 of interface components and a second type 32 of interface components. The first type 30 of interface components are positionable in a first positioning movement 34 and lockable in a first locking movement 36, and the second type 32 of interface components are positionable in a second positioning movement 38 and lockable in a second locking movement 40, the first locking movement 36 being different than the second locking movement 40.

The term "fixation interface" relates to an arrangement that provides a mechanical interaction for mounting parts to the cabin floor. The parts can be releasably fixed by the interface.

The fixation interface can also be referred to as fixation arrangement, mounting interface, mounting arrangement, connecting interface or connecting arrangement.

The term "aircraft cabin floor" relates to a floor within the aircraft cabin, e.g. delimiting the cabin area from a cargo area arranged below the cabin area within the fuselage of an aircraft, not shown in Fig. 1.

The term "primary connection studs" relates to pin-like elements that can be inserted into recesses of a floor support, such as the aircraft cabin floor 12 in Fig. 1, for acting as connecting interface. The studs can also be referred to as bolts or pins. The connection studs 14 may therefore have an insertion or mounting direction. In an option, the insertion or mounting direction is aligned with a Z-direction, along the longitudinal axis 21 in Fig. 1, in an aircraft when being mounted, i.e. assembled.

The plurality of primary connection studs can also be referred to as primary connection studs, connection stud, stud, fixation stud or arresting stud.

In an example, the fixation or arresting studs also provide a sealing, e.g. a sealing arrangement, device between the cabin space and a lower structure, not shown in Fig. 1.

In an example, the fixation or arresting studs are made from stainless, i.e. noncorrosive material.

The term "secondary attachment interface components" relates to elements that make the connecting interface of the primary connection studs 14 applicable to a plethora of equipment and components associated with the cabin floor, not shown in Fig. 1.

The plurality of secondary attachment interface components can also be referred to as secondary attachment interface components or secondary attachment interface component.

The term "equipment" relates to seats, monuments, lavatories, galleys and other parts provided within the cabin space, not shown in Fig. 1.

The term "mounting foot region" relates to the lower end of the connection stud 14 that is connected to the floor support structure.

The term "interface head region" relates to the upper end of the connection stud 14 that is provided for being engaged by the secondary attachment interface components 16 to be fixed by the connection stud 14.

The term "longitudinal axis" relates to an axis extending along the longest dimension of a connection stud 14 and that comprises the mounting foot region 18 and the interface head region 20.

In an example, the longitudinal axis 21 is perpendicular to the aircraft cabin floor 12, as shown in Fig. 1.

The plurality of fastening points can also be referred to as fastening points or fastening point or fixation point or fixation or attachment point or linearly arranged fastening points.

The term "fastening points" relates to connecting portions or segments arranged for acting as a mechanical interface for the studs. The fastening points 22 may be added to a floor support structure or may be provided in an integrated manner.

The term "protrusions" relates to maxima of deepenings or recesses in the surface profile of the studs, as shown in Fig. 1.

The plurality of protrusions 28 can also be referred to as protrusions.

In an example, the protrusions 28 and the connection studs 14 are made from a single piece.

The term "longitudinal direction" relates to the direction defined by the longest dimension of the studs, as shown in Fig. 1.

Engaging can also be referred to as locking.

In an example, the engaging exerts a preload force on the components involved in the engagement, not shown in Fig. 1.

The term "positioning movement" relates to a change in the position of the secondary attachment interface component 16 with respect to the position of the connection stud 14 before the position of the secondary attachment interface is fixed at a position defined at the connection stud 14, as shown in Fig. 1.

The term "locking movement" relates to a change of position and orientation of the secondary attachment interface component 16 that fixes the position and orientation of the secondary attachment interface component 16 to a position and orientation of the connection stud, as shown in Fig. 1.

The term "form-fitting hold" relates to blocking of movement of one of the plurality of secondary attachment interface components 16 in the longitudinal direction by one of the plurality of protrusions 22.

In an example, first type 30 of interface components and second type 32 of interface components are associated with the same interface head region 20 of one of the plurality of primary connection studs 14, not shown in Fig. 1.

In an example, the fixation interface 10 comprises the first type 30 of interface components and the second type 32 of interface components in a staggered arrangement. One of the first type 30 of interface component attached to a first one of the plurality of primary connection studs 14 follows on one of the second type 32 of interface components attached to a second one of the plurality of primary connection studs 14 along the fixation interface 10.

In an example, one of the first type 30 of interface component sealingly abuts to one of the second type 32 of interface components.

Fig. 2 shows a cross-section of a general scheme of an example of a fixation interface 10, comprising a first type 30 and a second type 32 of interface component in a staggered arrangement. The first type 30 of interface components are attachment portions 42 configured to form a seat rail portion 44 to fix a seat to the aircraft cabin floor 12.

In an example, the connection studs 14 and the secondary attachment interface components 16 are configured to form a specific sort of rail. The supporting floor structure so-to-speak plays the role of providing a body structure of the rail, while the connection studs 14 and the secondary attachment interface components 16 provide the engagement profile section, as shown in Fig. 2. The advantages of a such a type of profile, i.e. the easy connectability of fittings along a small pitch allowing a large freedom of attachment positions, are used, while its disadvantages of being restricted to certain size dimensions and geometrical shapes along the complete length are deleted.

As an advantage, the same seat structures can be mounted to various types of floor support structures. As a further advantage, the same seat structures can be used throughout local variations on the floor support structures.

In an example, not shown in Fig. 2, the first positioning movement 34 is a movement along the longitudinal axis 21 and the first locking movement 36 is an angular rotation around the longitudinal axis 21 by an angular range of approximately 45° to 135°.

In an example, the angular range comprises all angles from 0° to 180°.

As an advantage, a rapid mounting and tight mounting of seat structures results.

In an example, shown in Fig. 2, the second type 32 of interface components are rail cover sections 46 to close a gap 48 between floor panels 50 adjacent to the plurality of linearly arranged fastening points 22.

The term "rail cover sections" relates to a floor filler segment that can generally be used to level out deepenings on the aircraft cabin floor 12, as shown in Fig. 2.

In an example, the rail cover section 46 conforms with the shape of the gap, not shown in Fig. 2.

The term "gap" relates to a deepening or recess or simply a longitudinal extension that is formed by providing the fixation interface 10 between two surface components of the aircraft cabin floor 12, as shown in Fig. 2.

As an advantage, fast installation and deinstallation of seat rail covers is provided. As an advantage, a safe and protected fixation interface is provided. As an advantage, the fixation interface is protected from liquids and dirt. As a further advantage, a more reliable fixation interface is provided since agglomeration of liquids and dirt over time is prevented, that could block the positioning and locking movement over time. As an advantage, the fixation interface can be applied to different geometrical shapes of gaps.

In an example, not shown in Fig. 2, the second positioning movement 38 is a downwards movement to position the rail cover sections 46 along the plurality of linearly arranged fastening points 22 and the second locking movement 40 is a translational movement along a direction of the plurality of linearly arranged fastening points 22.

The term "downwards movement" relates to a movement from the entry of the gap 48 to the bottom of the gap. The entry of the gap 48 is provided on the cabin floor surface.

The term "translational movement" relates to a movement along the longitudinal extension of the gap.

As an effect, simple movements provide a fast and easy adaptability of the fixation rail. As an effect, simple movements provide an easy adaptability in the longitudinal direction from an entry point of the gap of the fixation rail, while the fixation interface cannot be accessed from the sides surrounded by the floor panels.

As an advantage, a fast installation and a fast deinstallation of the rail cover sections results. As an advantage, a fast installation and a fast deinstallation of the rail cover sections between already mounted cabin equipment at the fixation interface results.

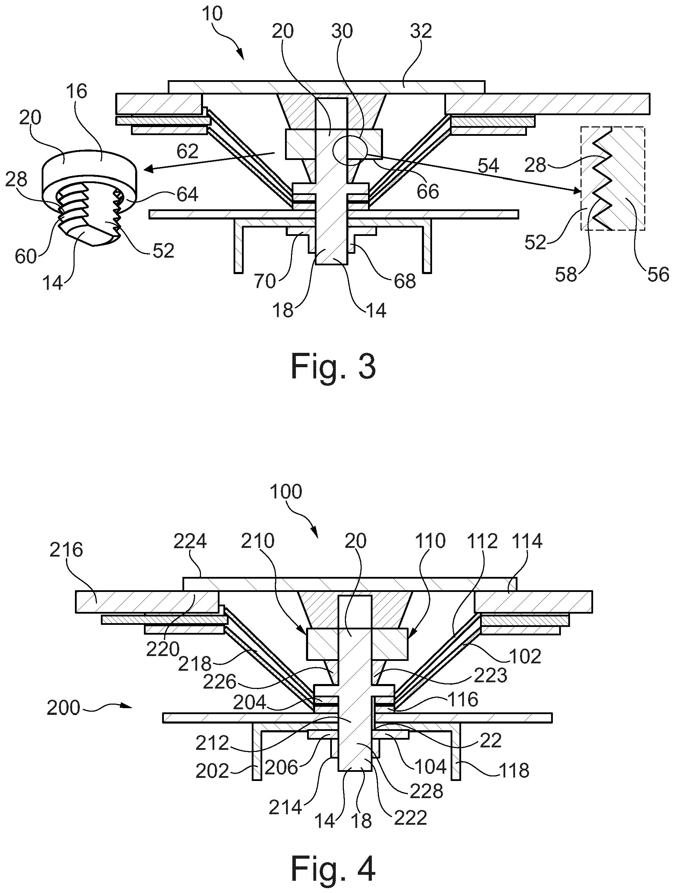

Fig. 3 shows a cross-section of a general scheme of an example of a fixation interface 10 comprising part-radial toothing elements 52. The plurality of protrusions 28 is provided as a plurality of part-radial toothing elements 52, as shown by arrow 54 presenting an enlarged image section of the plurality of protrusions 28 at the interface head section. Each one of the pluralities of first and second type 32 interface components has matching toothing counterparts 56 configured for a locking engagement 58 with the plurality of part-radial toothing elements 52.

The term "part-radial toothing elements" relates to the plurality of protrusions 28 as provided by deepening and recesses that are arranged on radially outer edges of the profile cross section of the connection studs 14. The protrusions 28 follow the radial circumference of the connection studs 14 but are interrupted in regions of the circumference that run parallel to the longitudinal axis 21 of the connection studs 14, as shown in Fig. 3.

The plurality of part-radial toothing elements can also be referred to as part-radial toothing elements or toothing element.

The term "matching toothing counterpart" relates to a negative shape of the shape of the cross-section along the longitudinal axis 21 of the connection studs 14, as shown in Fig. 3.

In an example, the cross-section of the part-radial toothing elements 52 along the longitudinal axis 21 has a triangular shape, as shown in Fig. 3.

In an example, the angles and the form of the edges of the triangular shape varies to influence the engagement force or to generate preload force at the connection stud 14 and the matching toothing counterpart 56.

As an advantage, the engagement force between the connection stud and the secondary attachment interface component 16 can be steered. As an advantage, a sticked tolerance toothing between the connection stud and the secondary attachment interface component 16 is provided. As an advantage, tolerances between a fixation interface and a floor arrangement can be compensated easier. As a further advantage, the same fixation interface can be used for different types of floor arrangements.

In an example of Fig. 3, the plurality of part-radial toothing elements 52 comprises two radial portions 60 lying on opposite sides of each of the plurality of primary connection studs 14, as shown by arrow 62 presenting an alternative depiction of the secondary attachment interface component 16 at the interface head region 20 having the plurality of part-radial toothing elements 52. The two radial portions 60 are configured to engage with matching interior radial portions 64 of each of the first type 30 of interface components. The two radial portions 60 and the matching interior radial portions 64 are configured to allow gliding of each of the first type 30 of interface components in the longitudinal direction to a predetermined step. The two radial portions 60 and the matching interior radial portions 64 are configured to lock each of the first type 30 of interface components at the predetermined step by rotation of each of the first type 30 of interface components around the longitudinal axis 21, not shown in Fig. 3. Each of the first type 30 of interface components and each of the plurality of primary connection studs 14 provide a flange 66 for engagement of fittings of cabin equipment.

The term "two radial portions" relates to the regions where the protrusions 28 provided by the deepening and recesses are interrupted, i.e. where the protrusions 28 are levelled out and comprise even surfaces, that run parallel to the longitudinal axis 21 of the connection studs 14. In other words, the connection stud 14 is cut at the sites of its interface head region 20, as shown in Fig. 3.

The term "matching interior radial portions" relates to a negative shape of the shape of the cross-section along the longitudinal axis 21 of the connection studs 14 comprising the two radial portions 60, not shown in Fig. 3.

The term "predetermined step" relates to the maxima of the protrusions 28 at the connection stud 14 that define a certain, quantized height along the longitudinal axis 21 of the connection stud, as shown in Fig. 3.

The term "fittings" relates to an attachment point of cabin equipment that can be engaged by a flange 66, as shown in Fig. 3.

In an example, the connection stud 14 and the plurality part-radial toothing elements 52 are configured for providing a stepwise variable flange 66 interspace with the first type 30 of interface components. The stepwise variable flange 66 interspace is configured to be engageable by fittings of cabin equipment, not shown in Fig. 3.

In an example, the primary connection stud 14 and the plurality part-radial toothing elements 52 are configured for exerting a preload force on engaged fittings in the stepwise variable flange 66 interspace, not shown in Fig. 3.

As an advantage, a secure and rapid fastening of cabin equipment at the fixation interface results. As an advantage, the first type 30 of interface components provides a fastening for a high geometrical variety of fittings of cabin equipment. As a further advantage, a high variety of different cabin equipment can be mounted by the same fixation interface to a high variety of different floor arrangements.

In an example of Fig. 3, the mounting foot region 18 has a threaded section 68 configured to establish a form-fitting connection with one of the plurality of fastening points 22 provided as blind nut 70.

The term "threaded section" relates to a portion with deepenings and recesses that follow a helical path along the longitudinal axis 21 of the connection stud.

The term "blind nut" relates to a sleeve for fastening of fastening structures.

In an alternative option, the mounting foot region 18 is provided with lateral extensions forming a Bayonet type of connection with the fastening points 22 provided as bushings with grooves to receive the lateral extensions, not shown in Fig. 3.

In an example, the interface head region 20 further comprises a tool interface for installation and deinstallation of the connection studs 14 at the fastening points 22, not shown in Fig. 3.

In an example, the connection head region further comprises marker elements to differentiate radial toothing elements among the plurality of radial toothing elements, not shown in Fig. 3.

As an advantage, the fastening points can be provided at various locations at the floor arrangement.

In an example, not shown in Fig. 3, one of the plurality of connection studs 14 is configured to be fastened to one of the plurality of fastening points 22 in the floor arrangement 24 to provide a longitudinally extending fixation interface segment configured to form an adaptable seat rail.

The term "longitudinally extending" relates to a segment that is longer than its width and that runs e.g. in the direction of a linear arrangement of the fastening points 22 transverse to the longitudinal direction of the connection studs 14.

The term "fixation interface segment" relates to an interface provided by the several connection studs 14 that is capable of receiving a fitting or the like for fixing cabin equipment. The term "segment" indicates that along the linear arrangement of the fastening points 22, also further segments can be provided. The segment forms a sort of rail segment. Several segments thus form a virtual rail with rail segments, i.e. rail sections, and interrupted rail segments, i.e. interrupted rail sections.

The term "adaptable" relates to the option to provide the engagement sections of the connection studs 14 only where needed.

The adaptable seat rail can also be referred to as adaptable seat fixation interface or adaptable monument fixation interface.

As an advantage, a seat rail is provided with fixation interface that is adaptable to geometrical variations of a support surrounding the seat rail in the longitudinal direction. As a further advantage, a fixation interface is provided that can be applied to a seat rail that varies in its geometrical dimensions in the longitudinal direction.

Fig. 4 shows a cross-section of a general scheme of examples of an aircraft floor mounting system 100 and an aircraft floor arrangement 200. The aircraft floor mounting system 100 comprises at least one longitudinally extending clamping profile 102, a plurality of fastening elements 104 configured to provide a plurality of fastening points 22 and at least one fixation interface 110 with a plurality of primary connection studs 14 according to one of the previous examples. The longitudinally extending clamping profile 102 comprises at least one outer section 112 for holding an edge of at least one floor panel 114, and a central recessed section 116 for attaching the longitudinally extending clamping profile 102 to a floor support beam 118 of an aircraft cabin. The plurality of fastening elements 104 is configured to be provided along the central recessed section 116 in the mounted state. The longitudinally extending clamping profile 102 is configured to be attached to the floor support beam 118 by the plurality of fastening elements 104. One of the plurality of primary connection studs 14 is configured to be mounted to a part of one of the plurality of fastening points 22.

The term "clamping profile" relates to a profile for attaching floor panels 114 by pressing them against a support surface. The floor panels 114 are thus clamped on their edges, as shown in Fig. 4.

As an example, the floor panels 114 are provided as corrugated profiles, i.e. corrugated panels.

Fig. 4 also shows a cross-section of a general scheme of an example of an aircraft floor arrangement 200. The aircraft floor arrangement 200 comprises at least one floor support beam 202, a plurality of fastening points 204 provided on an upper side along at least a part of the floor support beam 202, a plurality of fastening elements 206 and at least one fixation interface 210 with a plurality of primary connection studs 14 according to one of the previous examples. One of the plurality of fastening points 204 is configured to receive the mounting foot region 18 of one of the plurality of primary connection studs 14. The plurality of fastening points 204 is configured to secure the plurality of connection studs 14 against the floor support beam 202 by the plurality of fastening elements 206.

The term "upper side" relates to the side of the floor support beam 202 that shows to the aircraft floor arrangement.

In an example of Fig. 4, the plurality of fastening points 204 is provided as through holes 212 in an upper flange segment of the floor support beam 202 and the plurality of fastening elements 206 is provided as blind nuts 214. The blind nuts 214 provide a bore aligned with the through holes 212 in which the mounting foot region 18 of one of the plurality of primary connection studs 14 is inserted in an engaging manner with the blind nuts 214. One of the plurality of primary connection studs 14 and one of the blind nuts 214 are configured to establish a threaded or riveted form-fitting connection.

As an advantage, the floor arrangement can provide for a seat rail at various locations.

In an example of Fig. 4, the floor arrangement 200 according to one of the previous examples, further comprises at least one floor panel 216 resting on the floor support beam 202 and at least one clamping profile 218. The clamping profile 218 is configured to hold an upper lateral edge 220 of the floor panel 216 in a clamping manner. The clamping profile 218 is configured to be attached to the floor support beam 202 through fastening the plurality of primary connection studs 222 with the plurality of fastening elements at the plurality of fastening points 204. An interface head region 223 of one of the plurality of primary connection studs 222 comprises a rail cover section 224. The rail cover section 224 is attachable to the upper lateral edge 220 of the floor panel 216 through gliding it along the upper lateral edge 220 until a matching counterpart 226 of the rail cover section 224 engages with the interface head region 223 of one of the plurality of primary connection studs 222.

In an example, the floor support beam 202 is made from a corrosive material and the clamping profile is made from a noncorroding material.

As an advantage, the fixation rail can be applied to various types of floor panels. As a further advantage, the floor panels can vary across the floor arrangement.

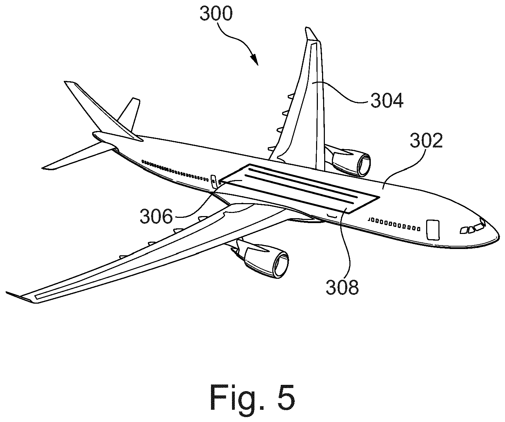

Fig. 5 shows an example of an aircraft 300 comprising an aircraft floor arrangement 308. The aircraft 300 comprises a fuselage 302, a wing arrangement 304 attached to the fuselage, an aircraft cabin 306 and an aircraft floor arrangement 308 according to one of the previous examples. The aircraft cabin 306 is provided within the fuselage 302 and the aircraft cabin 306 comprises the aircraft floor arrangement 308.

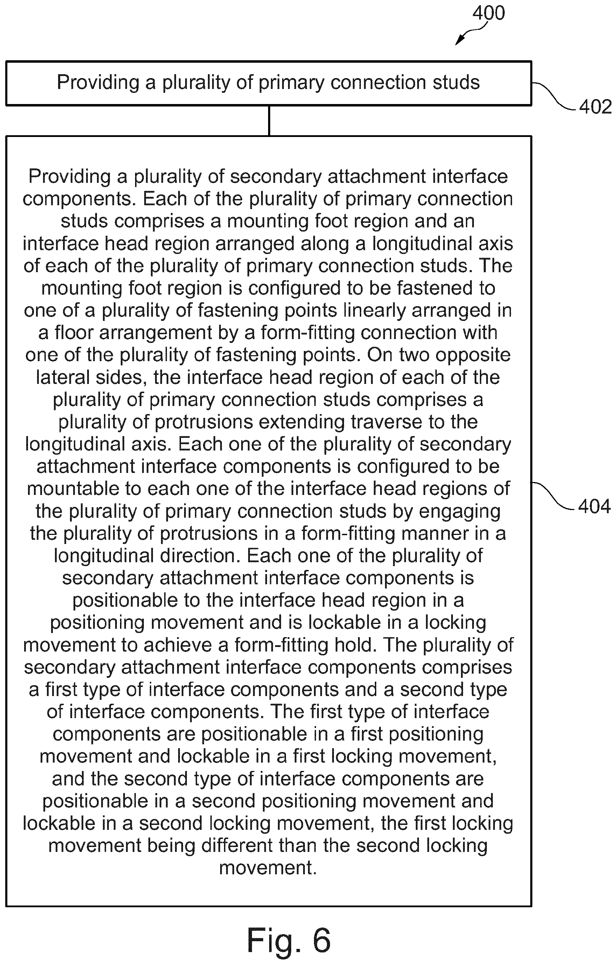

Fig. 6 shows basic steps of an example of a method for providing a fixation interface 10 for an aircraft cabin floor 12. The method 200 comprises the following steps with reference to Fig. 1:
- In a first step 402 a plurality of primary connection studs 14 is provided.
- In a second step 404 a plurality of secondary attachment interface components 16 is provided. Each of the plurality of primary connection studs 14 comprises a mounting foot region 18 and an interface head region 20 arranged along a longitudinal axis 21 of each of the plurality of primary connection studs 14. The mounting foot region 18 is configured to be fastened to one of a plurality of fastening points 22 linearly arranged in a floor arrangement 24 by a form-fitting connection with one of the plurality of fastening points 22. On two opposite lateral sides 26, the interface head region 20 of each of the plurality of primary connection studs 14 comprises a plurality of protrusions 28 extending traverse to the longitudinal axis 21. Each one of the plurality of secondary attachment interface components 16 is configured to be mountable to each one of the interface head regions 20 of the plurality of primary connection studs 14 by engaging the plurality of protrusions 28 in a form-fitting manner in a longitudinal direction. Each one of the plurality of secondary attachment interface components 16 is positionable to the interface head region 20 in a positioning movement and is lockable in a locking movement to achieve a form-fitting hold. The plurality of secondary attachment interface components 16 comprises a first type 30 of interface components and a second type 32 of interface components. The first type 30 of interface components are positionable in a first positioning movement 34 and lockable in a first locking movement 36, and the second type 32 of interface components are positionable in a second positioning movement 38 and lockable in a second locking movement 40, the first locking movement 36 being different than the second locking movement 40.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A fixation interface (10) for an aircraft cabin floor (12), the interface comprising:
- a plurality of primary connection studs (14); and
- a plurality of secondary attachment interface components (16);
wherein each of the plurality of primary connection studs comprises a mounting foot region (18) and an interface head region (20) arranged along a longitudinal axis (21) of each of the plurality of primary connection studs;
wherein the mounting foot region is configured to be fastened to one of a plurality of fastening points (22) linearly arranged in a floor arrangement (24) by a form-fitting connection with one of the plurality of fastening points;
wherein, on two opposite lateral sides (26), the interface head region of each of the plurality of primary connection studs comprises a plurality of protrusions (28) extending traverse to the longitudinal axis;
wherein each one of the plurality of secondary attachment interface components is configured to be mountable to each one of the interface head regions of the plurality of primary connection studs by engaging the plurality of protrusions in a form-fitting manner in a longitudinal direction;
wherein each one of the plurality of secondary attachment interface components is positionable to the interface head region in a positioning movement and is lockable in a locking movement to achieve a form-fitting hold;
wherein the plurality of secondary attachment interface components comprises a first type (30) of interface components and a second type (32) of interface components; and
wherein the first type of interface components are positionable in a first positioning movement (34) and lockable in a first locking movement (36), and the second type of interface components are positionable in a second positioning movement (38) and lockable in a second locking movement (40), the first locking movement being different than the second locking movement.

2. Interface according to claim 1, wherein the first type of interface components are attachment portions (42) configured to form a seat rail portion (44) to fix a seat to the aircraft cabin floor.

3. Interface according to claim 1 or 2, wherein the first positioning movement is a movement along the longitudinal axis and the first locking movement is an angular rotation around the longitudinal axis by an angular range of approximately 45° to 135°.

4. Interface according to claim 1, 2 or 3, wherein the second type of interface components are rail cover sections (46) to close a gap (48) between floor panels (50) adjacent to the plurality of linearly arranged fastening points.

5. Interface according to one of the preceding claims, wherein the second positioning movement is a downwards movement to position the rail cover sections along the plurality of linearly arranged fastening points and the second locking movement is a translational movement along a direction of the plurality of linearly arranged fastening points.

6. Interface according to one of the preceding claims, wherein the plurality of protrusions is provided as a plurality of part-radial toothing elements (52); and
wherein each one of the pluralities of first and second type interface components has matching toothing counterparts (56) configured for a locking engagement (58) with the plurality of part-radial toothing elements.

7. Interface according to one of the preceding claims, wherein the plurality of part-radial toothing elements comprises two radial portions (60) lying on opposite sides of each of the plurality of primary connection studs;
wherein the two radial portions are configured to engage with matching interior radial portions (64) of each of the first type of interface components;
wherein the two radial portions and the matching interior radial portions are configured to allow gliding of each of the first type of interface components in the longitudinal direction to a predetermined step;
wherein the two radial portions and the matching interior radial portions are configured to lock each of the first type of interface components at the predetermined step by rotation of each of the first type of interface components around the longitudinal axis; and
wherein each of the first type of interface components and each of the plurality of primary connection studs provide a flange (66) for engagement of fittings of cabin equipment.

8. Interface according to one of the preceding claims, wherein the mounting foot region has a threaded section (68) configured to establish a form-fitting connection with one of the plurality of fastening points provided as blind nut (70).

9. Interface according to one of the preceding claims, wherein one of the plurality of connection studs is configured to be fastened to one of the plurality of fastening points in the floor arrangement to provide a longitudinally extending fixation interface segment configured to form an adaptable seat rail.

10. An aircraft floor mounting system (100), comprising:
- at least one longitudinally extending clamping profile (102);
- a plurality of fastening elements (104) configured to provide a plurality of fastening points; and
- at least one fixation interface (110) with a plurality of primary connection studs according to one of the claims 1 to 9;
wherein the longitudinally extending clamping profile comprises at least one outer section (112) for holding an edge of at least one floor panel (114), and a central recessed section (116) for attaching the longitudinally extending clamping profile to a floor support beam (118) of an aircraft cabin;
wherein the plurality of fastening elements is configured to be provided along the central recessed section in the mounted state;
wherein the longitudinally extending clamping profile is configured to be attached to the floor support beam by the plurality of fastening elements; and
wherein one of the plurality of primary connection studs is configured to be mounted to a part of one of the plurality of fastening points.

11. An aircraft floor arrangement (200) comprising:
- at least one floor support beam (202);
- a plurality of fastening points (204) provided on an upper side along at least a part of the floor support beam;
- a plurality of fastening elements (206); and
- at least one fixation interface (210) with a plurality of primary connection studs according to one of the claims 1 to 9;
wherein one of the plurality of fastening points is configured to receive the mounting foot region of one of the plurality of primary connection studs; and
wherein the plurality of fastening points is configured to secure the plurality of connection studs against the floor support beam by the plurality of fastening elements.

12. Floor arrangement according to claim 11, wherein the plurality of fastening points is provided as through holes (212) in an upper flange segment of the floor support beam and the plurality of fastening elements is provided as blind nuts (214);
wherein the blind nuts provide a bore aligned with the through holes in which the mounting foot region of one of the plurality of primary connection studs is inserted in an engaging manner with the blind nuts; and
wherein one of the plurality of primary connection studs and one of the blind nuts are configured to establish a threaded or riveted form-fitting connection.

13. Floor arrangement according to claim 11 or 12, further comprising:
- at least one floor panel (216) resting on the floor support beam; and
- at least one clamping profile (218);
wherein the clamping profile is configured to hold an upper lateral edge (220) of the floor panel in a clamping manner;
wherein the clamping profile is configured to be attached to the floor support beam through fastening the plurality of primary connection studs with the plurality of fastening elements at the plurality of fastening points;
wherein an interface head region of one of the plurality of primary connection studs comprises a rail cover section (222); and
wherein the rail cover section is attachable to the upper lateral edge of the floor panel through gliding it along the upper lateral edge until a matching counterpart (224) of the rail cover section engages with the interface head region (226) of one of the plurality of primary connection studs (228).

14. An aircraft (300), comprising:
- a fuselage (302);
- a wing arrangement (304) attached to the fuselage;
- an aircraft cabin (306); and
- an aircraft floor arrangement (308) according to one of claims 11 to 13;
wherein the aircraft cabin is provided within the fuselage; and
wherein the aircraft cabin comprises the aircraft floor arrangement.

15. A method (400) for providing a fixation interface for an aircraft cabin floor, comprising the following steps:
- Providing (402) a plurality of primary connection studs; and
- Providing (404) a plurality of secondary attachment interface components;
wherein each of the plurality of primary connection studs comprises a mounting foot region and an interface head region arranged along a longitudinal axis of each of the plurality of primary connection studs;
wherein the mounting foot region is configured to be fastened to one of a plurality of fastening points linearly arranged in a floor arrangement by a form-fitting connection with one of the plurality of fastening points;
wherein, on two opposite lateral sides, the interface head region of each of the plurality of primary connection studs comprises a plurality of protrusions extending traverse to the longitudinal axis;
wherein each one of the plurality of secondary attachment interface components is configured to be mountable to each one of the interface head regions of the plurality of primary connection studs by engaging the plurality of protrusions in a form-fitting manner in a longitudinal direction;
wherein each one of the plurality of secondary attachment interface components is positionable to the interface head region in a positioning movement and is lockable in a locking movement to achieve a form-fitting hold;
wherein the plurality of secondary attachment interface components comprises a first type of interface components and a second type of interface components; and
wherein the first type of interface components are positionable in a first positioning movement and lockable in a first locking movement, and the second type of interface components are positionable in a second positioning movement and lockable in a second locking movement, the first locking movement being different than the second locking movement.
